# EUROPEAN PATENT APPLICATION

(11) **EP 2 317 101 A1**
(43) Date of publication of application: **04.05.2011**
(21) Application number: 09174460.7
(22) Date of filing: 29.10.2009
(51) Int. Cl.: F02D 41/06, F02N 11/08

(54) **Method and system of engine start control**

(71) Applicant: Ford Global Technologies, LLC, Dearborn, MI 48126 (US)
(72) Inventor: Johansson, Andreas, 41832 Göteborg (SE); Almhagen, Petter, 44831 Floda (SE); Forssell, Jonas, 42363 Torslanda (SE); Belfrage, Anders, 44339 Lerum (SE); Bengtsson, Peter, 42165 Västra Frölunda (SE)
(74) Representative: Widahl, Jenny Marie

(57) **Abstract**

The present invention relates to a method and system (1) of engine start control for an internal combustion engine (1) having a permanently engaged starter (2), an engine block (3), a crankshaft (4) rotatably disposed within the engine block (3), a piston (5) rotatably connected to the crankshaft (4) and moveable within an associated cylinder (6), and a combustion chamber (7) in the associated cylinder (3). The starter (2) is run up to its peak revolutions per minute. Preparations are made for a first fuel injection in the combustion chamber (7) through drawing air into the combustion chamber (7). The starter (2) is shut off when the piston (5) is at minimum compression. The first fuel injection into the combustion chamber (7) is performed. Inertia of the moving parts of the internal combustion engine (1) is allowed to bring the piston (5) through a following compression and ignition of the air/fuel in the combustion chamber (7).

## Description

### Technical field

The present invention relates to a system of engine start control for an internal combustion engine having a permanently engaged starter in accordance with the preamble of claim 1.

The present invention also relates to a method of engine start control for an internal combustion engine having a permanently engaged starter in accordance with the preamble of claim 5.

### Background of the invention

A so called start-stop or idle-stop arrangement is based on the concept of halting a vehicle combustion engine during vehicle standstill, e.g. when waiting for a traffic light to change from red to green. Such an arrangement may allow for substantial savings in fuel consumption. For mixed highway/rural and city driving savings of at least 2-4% are feasible and for city driving savings of up to 10% are feasible.

The key performance parameters for a start-stop system are low noise level and high durability. These performance parameters are directly perceived by a vehicle customer. Start-stop systems usually rely on a permanently engaged starter system.

A permanently engaged starter system differs from a conventional traditional starter system in that the gears thereof may be made to a better precision, but the above performance parameters are still present and need to be optimized.

The nature of a starter motor based system makes gear design and internal design of the starter is very important in order to limit the whining noise emitted by the gears thereof during cranking. This whining noise becomes especially noticeable at high rpm:s.

The number of cranking starts during an engine lifetime may be 10-20 times higher than that of a conventional traditional starter system and therefore high durability is required for the involved components of a permanently engaged starter system. Actions for ensuring a low noise level and high durability through making gears to a better precision and through specialized gear design and internal design of the starter may result in a high system cost.

### Summary of the invention

One object of the invention is to provide an improved system of engine start control for an internal combustion engine having a permanently engaged starter, an engine block, a crankshaft rotatably disposed within the engine block, at least one piston rotatably connected to the crankshaft and moveable within an associated cylinder in the engine block, and at least one combustion chamber in the associated cylinder defined by the at least one piston and the engine block.

This object is achieved by the system as claimed in claim 1.

Thanks to the provision of means for running the starter up to its peak revolutions per minute; means for preparing for a first fuel injection in the combustion chamber of a first cylinder through drawing air into the combustion chamber of the first cylinder; means for shutting off the starter when the piston of the first cylinder is at minimum compression; means performing the first fuel injection into the combustion chamber of the first cylinder; and means for allowing inertia of the moving parts of the internal combustion engine to bring the piston of the first cylinder through a following compression and ignition of the air/fuel in the combustion chamber of the first cylinder, the number of rotations that the starter must be operated for starting is limited, resulting in reduced cranking noise and increased durability.

A further object of the invention is to provide an improved method of engine start control for an internal combustion engine having a permanently engaged starter, an engine block, a crankshaft rotatably disposed within the engine block, at least one piston rotatably connected to the crankshaft and moveable within an associated cylinder in the engine block, and at least one combustion chamber in the associated cylinder defined by the at least one piston and the engine block.

This object is achieved by the method as claimed in claim 5.

Thanks to the provision of the steps of: running the starter up to its peak revolutions per minute; preparing for a first fuel injection in the combustion chamber of a first cylinder through drawing air into the combustion chamber of the first cylinder; shutting off the starter when the piston of the first cylinder is at minimum compression; performing the first fuel injection into the combustion chamber of the first cylinder; and allowing inertia of the moving parts of the internal combustion engine to bring the piston of the first cylinder through a following compression and ignition of the air/fuel in the combustion chamber of the first cylinder, the number of rotations that the starter must be operated for starting is limited, resulting in reduced cranking noise and increased durability.

Preferred embodiments are listed in the dependent claims.

### Description of drawings

In the following, the invention will be described in greater detail by way of example only with reference to attached drawings, in which
Fig. 1 is a schematic illustration of the system of engine start control for an internal combustion engine having a permanently engaged starter in accordance with the present invention, and
Fig. 2 is a simplified block schematic illustrating the method of engine start control for an internal combustion engine having a permanently engaged starter in accordance with the present invention.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Description of embodiments

The present invention relates to a system 1 and method of engine start control for an internal combustion engine having a permanently engaged starter 2.

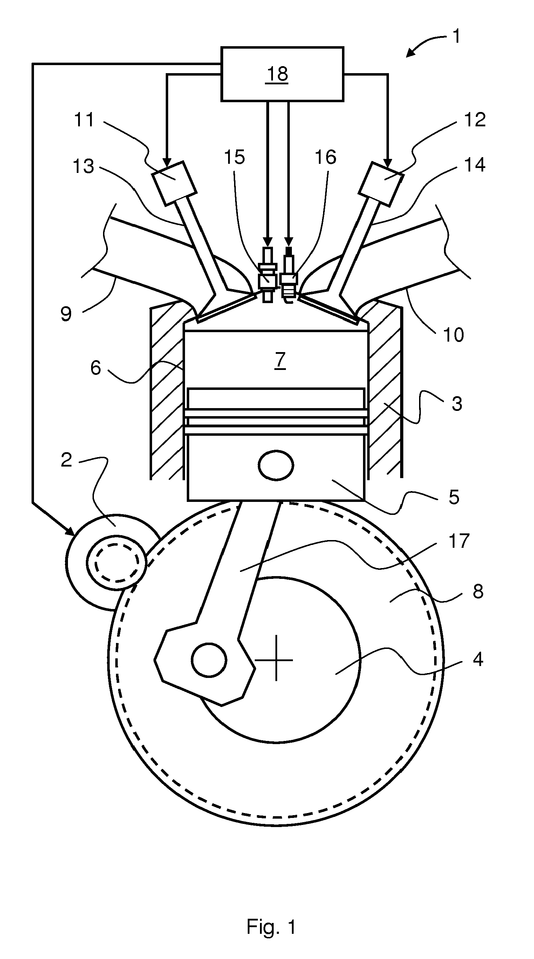

Figure 1 illustrates a system of engine start control for an internal combustion engine generally designated 1. The internal combustion engine 1 has a permanently engaged starter 2, which is permanently engaged with a crankshaft 4 of the internal combustion engine 1 through a crank wheel 8. The starter 2 is preferably an electric starter 2. A one-way clutch (not shown) may be arranged between the crank wheel 8 and the crankshaft 4, in order to allow the starter to rest once the internal combustion engine 1 has been started. The internal combustion engine 1 further has an engine block 3, which is only partially illustrated in figure 1. The crankshaft 4 is rotatably disposed within the engine block 3. At least one piston 5 is rotatably connected to the crankshaft 4 via a connecting rod 17 and moveable within an associated cylinder 6 in the engine block 3. At least one combustion chamber 7 in the associated cylinder 3 is defined by the at least one piston 5 and the engine block 3.

It should be obvious to the person skilled in the art that although the present invention is described with reference to an internal combustion engine 1, only one cylinder of which is illustrated in figure 1, the present invention is applicable to internal combustion engines having an arbitrary number of cylinders, e.g. two-, three-, four-, five-, six-, eight-, ten-, twelve-cylinder internal combustion engines, and so on.

The system 1 of engine start control for an internal combustion engine comprises means 18 for running the starter 2 up to its peak revolutions per minute. These means 18 may be part of an engine control unit.

Means 11, 13, 18 are also provided for preparing for a first fuel injection in the combustion chamber 7 of a first cylinder 6 through drawing air into the combustion chamber 7 of the first cylinder 6. The term "first cylinder" as used herein should be interpreted as any cylinder of the internal combustion engine in which the system 1 and method of engine start control suggested herein is implemented. Air is drawn into the combustion chamber 7 of the first cylinder 6 as the piston 5 moves downwards, expanding the combustion chamber 7, through opening an intake valve 13. The intake valve 13 may be brought to open by a conventional camshaft arrangement or it may be brought to open by any suitable valve operating mechanism 11, e.g. under the control of engine control unit 18.

Further, means 18 are provided for shutting off the starter 2, running at its peak revolutions per minute, when the piston 5 of the first cylinder 6 is at minimum compression. Also these means 18 may be part of an engine control unit. Thus, the starter 2 is shut off before the first injection of fuel.

Shutting of an electric starter 2 when it is running at its peak revolutions per minute and the piston 5 of the first cylinder 6 is at minimum compression is the ideal time to shut of the starter 2, as it will then also will have its minimum current consumption. Shutting of at minimum current consumption will increase the durability of a relay (not shown) or similar component used in the starter 2 control system.

Means 15, 18 are also provided for performing the first fuel injection into the combustion chamber 7 of the first cylinder 6. These means 15, 18 may also include part of an engine control unit and a fuel injection system 15.

Finally, means 18 are also present for allowing inertia of the moving parts of the internal combustion engine 1, (e.g. piston 5, connecting rod 17, crankshaft 4 and a flywheel (not shown)), to bring the piston 5 of the first cylinder 6 through a following compression and ignition of the air/fuel in the combustion chamber 7 of the first cylinder 6. During this compression intake valve 13 is closed and an exhaust valve 14 is also closed. The intake valve 13 and exhaust valve 14 may be brought to close by conventional camshaft arrangements or they may be brought to close by any suitable valve operating mechanisms 11, 12, e.g. under the control of engine control unit 18.

Ignition of the air/fuel in the combustion chamber 7 of the first cylinder 6 may, in case of a petrol engine or the like, be facilitated by a spark plug 16, under the control of an ignition system (not shown) that may be part of or controlled by an engine control unit 18. In the case of a diesel engine, ignition may take place without the use of a spark plug 16.

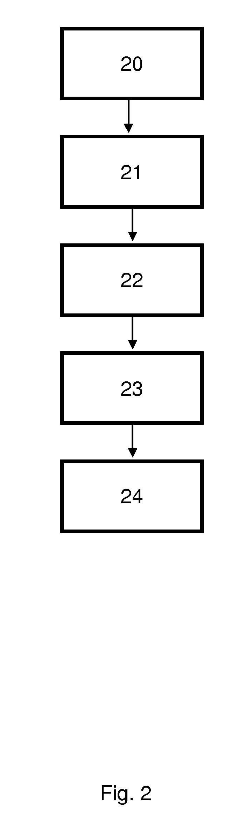

The present invention also relates to a method of engine start control for an internal combustion engine 1, as illustrated in figure 2. The internal combustion engine 1 has a permanently engaged starter 2, an engine block 3, a crankshaft 4 rotatably disposed within the engine block 3, at least one piston 5 rotatably connected to the crankshaft 4 and moveable within an associated cylinder 6 in the engine block 3, and at least one combustion chamber 7 in the associated cylinder 3 defined by the at least one piston 5 and the engine block 3.

The method of engine start control for an internal combustion engine 1 in accordance with the present invention comprises the steps of:
20 - running the starter 2 up to its peak revolutions per minute;
21 - preparing for a first fuel injection in the combustion chamber 7 of a first cylinder 6 through drawing air into the combustion chamber 7 of the first cylinder 6;
22 - shutting off the starter 2 when the piston 5 of the first cylinder 6 is at minimum compression;
23 - performing the first fuel injection into the combustion chamber 7 of the first cylinder 6; allowing inertia of the moving parts of the internal combustion engine 1 to bring the piston 5 of the first cylinder 6 through a following compression and ignition of the air/fuel in the combustion chamber 7 of the first cylinder 6.

The present invention further also relates to an automotive vehicle 2, comprising a system 1 of engine start control for an internal combustion engine having a permanently engaged starter 2 as described above.

By limiting the number of rotations that the starter must be operating, both the cranking noise may be limited and the durability increased. The noise will be limited due to the fact that the rotational speed of the internal combustion engine 1 is still kept low. The durability will be high since the permanently engaged starter 2 will be run a very low number of rotations at every starting instance, and these are directly related to the durability of the system, both gear wear and starter wear.

The proposed method of engine start control for an internal combustion engine 1 in accordance with the present invention may be used with most starter systems, except for starter systems where a pinion has to be engaged and disengaged. This is the cases for ADS (Assisted Direct Start) and ESM (Enhanced Starter Motor) systems, which are currently becoming the norm for large scale start/stop systems.

The invention is not limited to the above-described embodiments, but may be varied within the scope of the following claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A system (1) of engine start control for an internal combustion engine (1) having a permanently engaged starter (2), an engine block (3), a crankshaft (4) rotatably disposed within the engine block (3), at least one piston (5) rotatably connected to the crankshaft (4) and moveable within an associated cylinder (6) in the engine block (3), and at least one combustion chamber (7) in the associated cylinder (3) defined by the at least one piston (5) and the engine block (3), **characterized in that** it comprises:
means (18) for running the starter (2) up to its peak revolutions per minute;
means (11, 13, 18) for preparing for a first fuel injection in the combustion chamber (7) of a first cylinder (6) through drawing air into the combustion chamber (7) of the first cylinder (6);
means (18) for shutting off the starter (2) when the piston (5) of the first cylinder (6) is at minimum compression;
means (15, 18) for performing the first fuel injection into the combustion chamber (7) of the first cylinder (6);
means (18) for allowing inertia of the moving parts of the internal combustion engine (1) to bring the piston (5) of the first cylinder (6) through a following compression and
ignition of the air/fuel in the combustion chamber (7) of the first cylinder (6).

2. A system (1) according to claim 1,
**characterized in that** the means (18) for running the starter (2) up to its peak revolutions per minute is an engine control unit.

3. A system (1) according to any one of claims 1 to 2,
**characterized in that** the starter (2) is an electric starter and the means (18) for shutting off the starter (2) when the piston (5) of the first cylinder (6) is at minimum compression further are arranged to shut off the electric starter as it reaches its minimum current consumption with the piston (5) of the first cylinder (6) at minimum compression.

4. A system (1) according to any one of claims 1 to 3,
**characterized in that** the means (18) for shutting off the starter (2) when the piston (5) of the first cylinder (6) is at minimum compression further are arranged to shut off the starter (2) before means (15, 18) are allowed to perform the first fuel injection into the combustion chamber (7) of the first cylinder (6).

5. A method of engine start control for an internal combustion engine (1) having a permanently engaged starter (2), an engine block (3), a crankshaft (4) rotatably disposed within the engine block (3), at least one piston (5) rotatably connected to the crankshaft (4) and moveable within an associated cylinder (6) in the engine block (3), and at least one combustion chamber (7) in the associated cylinder (3) defined by the at least one piston (5) and the engine block (3), **characterized in that** it comprises the steps of:
running the starter (2) up to its peak revolutions per minute;
preparing for a first fuel injection in the combustion chamber (7) of a first cylinder (6) through drawing air into the combustion chamber (7) of the first cylinder (6);
shutting off the starter (2) when the piston (5) of the first cylinder (6) is at minimum compression;
performing the first fuel injection into the combustion chamber (7) of the first cylinder (6);
allowing inertia of the moving parts of the internal combustion engine (1) to bring the piston (5) of the first cylinder (6) through a following compression and ignition of the air/fuel in the combustion chamber (7) of the first cylinder (6).

6. A method according to claim 5,
**characterized in that** it further comprises the step of arranging the starter (2) to run up to its peak revolutions per minute under the control of an engine control unit.

7. A method according to any one of claims 5 to 6,
**characterized in that** it further comprises the steps of providing as the starter (2) an electric starter and arranging the means (18) for shutting off the starter (2) when the piston (5) of the first cylinder (6) is at minimum compression to shut off the electric starter as it reaches its minimum current consumption with the piston (5) of the first cylinder (6) at minimum compression.

8. A method according to any one of claims 5 to 7,
**characterized in that** it further comprises the steps of arranging the means (18) for shutting off the starter (2) when the piston (5) of the first cylinder (6) is at minimum compression to shut off the starter (2) before allowing means (15, 18) to perform the first fuel injection into the combustion chamber (7) of the first cylinder (6).

9. An automotive vehicle (2), **characterized in that** it comprises a system (1) of engine start control for an internal combustion engine having a permanently engaged starter (2) according to any one of claims 1 to 7.
